Europäisches Patentamt

European Patent Office

Office européen des brevets

(19)

(11) Numéro de publication: **0 001 533**
**B1**

(12)

# FASCICULE DE BREVET EUROPEEN

(45) Date de publication du fascicule de brevet: **07.10.81**

(51) Int. Cl.³: **C 01 D 5/16**

(21) Numéro de dépôt: **78400127.3**

(22) Date de dépôt: **05.10.78**

(54) **Procédé de purification de sulfate de sodium renfermant des traces de méthionine.**

(30) Priorité: **12.10.77 FR 7730654**

(43) Date de publication de la demande:
**18.04.79 Bulletin 79/8**

(45) Mention de la délivrance du brevet:
**07.10.81 Bulletin 81/40**

(84) Etats Contractants Désignés:
**BE CH DE FR GB LU NL**

(56) Documents cités:
**DE - A - 315 940**
**FR - A - 1 298 862**
**FR - A - 2 183 550**

(73) Titulaire: **RHONE-POULENC INDUSTRIES**
**22, avenue Montaigne**
**F-75008 Paris (FR)**

(72) Inventeur: **Genin, Jean-Louis**
**15 Sente des Jumelles**
**F-78620 L'Etang La Ville (FR)**
Inventeur: **Londiche, André**
**7 Route de la Madone**
**F-38370 Saint-Clair Du Rhone (FR)**
Inventeur: **Rolland, René**
**Chemin de Matras**
**F-38370 Saint-Clair Du Rhone (FR)**

(74) Mandataire: **Martin, Henri et al,**
**RHONE-POULENC Service Brevets Chimie B.P. 753**
**F-75360 Paris Cedex 08 (FR)**

Courier Press, Leamington Spa, England.

Procédé de purification de sulfate de sodium renfermant des traces de méthionine

L'invention a pour objet un procédé de purification de sulfate de sodium renfermant de la méthionine.

Le sulfate de sodium est un sous-produit de la fabrication de la méthionine, et on le retrouve dans les eaux-mères lors de cette fabrication.

Une solution pour récupérer ce sulfate de sodium, d'apparence simple consisterait à calciner le sulfate de sodium.

Mais dans ce cas l'on n'obtient qu'un sulfate de sodium sous forme de petits cristaux anhydres, de teinte grisâtre, présentant une odeur résiduelle da méthionine.

De plus, les gaz de calcination nauséabonds ne sauraient être évacués directement par la cheminée de l'installation sous peine d'être à l'origine de nuisances particulièrement gênantes.

On a déjà proposé dans le brevet allemand 315 940 d'éliminer le fer d'un sel de Glauber en l'oxydant sous forme de chlorure ferrique par un dérivé halogéné, à température supérieure à 400°C.

On a aussi proposé dans le demande française 2 183 550 un procédé de désodorisation et de blanchiment de sulfate de sodium résiduel de la fabrication de la méthionine par un traitement au peroxyde d'hydrogène stabilisé par un phosphate alcalin.

Mais une telle solution s'avère encore non entièrement satisfaisante, en ce qui concerne l'élimination de l'odeur résiduelle de méthionine.

Le procédé selon l'invention consiste à réaliser un traitement thermique en milieu oxydant: on traite le sulfate de sodium par une solution de chlorate ou de persulfate puis on calcine le sulfate de sodium ainsi traité.

Pratiquement le traitement thermique est d'au moins une heure de manière à obtenir un produit sous forme de poudre blanche inodore ne renfermant pratiquement pas d'agglomérats.

On constate que le procédé selon l'invention conduit:

— à décomposer la méthionine,

— à détruire les produits de décomposition charbonneuse.

Par ailleurs, on note que le produit obtenu ne motte pas contrairement au sulfate non traité par l'invention et qu'il est stable au stockage ce qui facilite son utilisation et sa conservation.

De plus, on constate que les fumées évacuées sont inodores et que la corrosion observée est faible.

Un des facteurs critiques du procédé selon l'invention réside dans le choix de l'oxydant.

En effet, si l'oxydant est trop faible, la purification n'est pas assez poussée et le produit ne répond pas aux normes désirées, si l'oxydant est trop puissant, il y a corrosion du dispositif de calcination.

C'est pourquoi, avantageusement le sulfate de sodium impur est additionné d'une solution de chlorate de sodium concentrée de l'ordre de 50 %, la quantité de chlorate de sodium par rapport au sulfate étant de 1 à 3 %.

Technologiquement une des grandes difficultés réside dans les risques de corrosion.

C'est pourquoi de longues recherches ont été nécessaires pour mettre au point un procédé répondant à l'ensemble des exigences précitées, tant en ce qui concerne le produit obtenu sur le plan de qualités chimiques, et physiques, qu'en ce qui a trait à la mise en oeuvre du procédé.

Selon un mode de réalisation pratique et qui fait partie de l'invention,

— dans une première étape on traite le sulfate de sodium par pulvérisation au moyen de la solution oxydante à température ambiante de manière à imprégner le sulfate de sodium,

— puis dans une deuxième étape on fait subir un traitement thermique au sulfate imprégné en élevant progressivement et uniformément la température,

— enfin on recueille en continu le produit obtenu.

De manière avantageuse le traitement thermique est effectué au moyen d'un gaz chaud tel qu'air chaud alimenté à contre-courant dans un four rotatif.

Afin d'assurer une bonne répartition calorifique toutes les dispositions sont prises d'un point de vue isolation thermique et homogénéité à l'intérieur du four, de sorte à obtenir une température constante dans la partie amont et médiane du four et un baisse progressive et régulière de la température dans la partie aval dudit four.

On a observé que cette technique à contre-courant avec contrôle du profil de températures conduisait à des résultats supérieurs à ceux observés avec d'autres techniques plus classiques, et notamment four rotatif à co-courant, séchage de type flash, four à moufle, chauffage par infra-rouge, etc...

De manière préférentielle, dans le cas d'un traitement par le chlorate, on porte le sulfate de sodium à purifier à une température comprise pratiquement entre 600 et 450°C, car d'une part, it faut éviter que le sulfate ne prenne en masse, phénomère qui commence á apparaitre vers 600°C, et d'autre part, pour des raisons économiques et technologiques on a intérêt à adopter une température suffisamment élevée.

Comme déjà dit précédemment, on utilise de préférence du chlorate de sodium comme oxydant, mais on ne sortirait pas du cadre de la présente invention en faisant appel à un autre oxydant, ainsi on a observé que le persulfate de sodium ou d'ammonium donnait d'excellents résultats quand à la purification du sulfate de sodium, néanmoins, de tels produits s'avèrent d'une utilisation plus délicate en ce qui concern la corrosion.

La quantité d'oxydant par rapport au sulfate de sodium dépend bien naturellement de la nature de cet oxydant, et des conditions de traitement, notamment de température.

Ainsi on peut abaisser la température à condition d'augmenter la proportion en oxydant et vice-versa.

Le produit obtenu se présente sous forme d'une poudre blanche de densité comprise entre 1,1 et 1,3 et d'une blancheur au moins égale à 90 % de celle d'un carbonate de magnésium en poudre de référence, déterminé comme suit.

L'échantillon dont on veut mesurer la blancheur est étalé en un cercle de 10 cm de diamètre environ et on pose directement dessus un leucomètre photomètre LANGE équipé d'un filtre vert, la lecture s'effectuant sur un galvono-mètre Multiflex (l'appareil Photovolt peut également être utilisé pour cette mesure).

On effectue un étalonnage préalable sur carbonate de magnésium en poudre Prolabo pour analyse n° 25096 en amenant l'aiguille du galvanomètre à 100 %.

L'aspect du sulfate de sodium peut être amélioré par broyage. Le produit obtenu peut servir en particulier en compositions détergentes.

Mais la présente invention sera mieux comprise à l'aide des exemples suivants donnés à titre illustratif, mais nullement limitatif.

Dans le schéma ci-annexé on a représenté uniquement les deux tambours d'humidification 1 et calcination 2.

Le tambour 1 est pourvu d'une rampe d'humidification 3 et muni de moyens d'entraînement en rotation 4.

Le sulfate de sodium à traiter est amené par une trémie 5 dans le tambour d'humidification, et evacué par un conduit 6 dans le four de calcination 2.

Celui-ci présente des moyens d'entraînement en rotation 7.

L'air chaud est introduit à l'extrémité aval 8 du tambour tandis que le sulfate traité est évacué par 9 avant de subir un refroidissement en 10. Le tambour 2 est de type classique calorifugé à sa partie amont, et présentant dans cette même partie amont des lignes de marteaux.

### Exemple 1

On utilise un tambour d'humidification 1 de 3 m long et de 1,3 m de diamètre. On traite le sulfate avec une solution de chlorate à 50 % à raison de 40 kg à l'heure, soit 20 kg de $NaClO_3$ par tonne de sulfate soit 2 % de chlorate. Le temps de séjour dans ce premier tambour est de 1 H 20 mm.

Le produit passe ensuite dans le calcinateur 2 de longueur égale à 12 m et de diamètre de 2 m muni à l'intérieur d'aubes de relevage.

Le volume du lit correspond à 8 tonnes de $Na_2SO_4$ et le temps de séjour est de 8 h.

La température des gaz à l'entrée, en équilibre de marche, est de 660°C, la température de sortie des gaz est de 400°C, ce qui correspond à une température de traitement du produit de 550°C.

Le produit obtenu se présente sous forme d'une poudre blanche sans méthionine.

La blancheur est de 93 %.

On note aussi une absence totale de points noirs ou rouges ce qui indique une absence de corrosion.

Par ailleurs, on observe qu'il n'y a pas collages à l'intérieur du calcinateur.

### Exemple 2

Cet exemple est identique à l'exemple 1, sauf que la teneur en chlorate a été abaissée à 1,5 %.

La blancheur est alors de 90 %.

### Exemple 3

Cet exemple est identique à l'exemple 2 sauf que l'on a monté la température d'entrée des gaz à 750°C, ce qui correspond à un traitement du produit de 600°C.

La blancheur atteinte reprend la même valeur qu'à l'exemple 1 soit 93 %.

### Exemple 4

On remplace dans les conditions de l'exemple 1, le chlorate par du persulfate de sodium. La blancheur est portée à 95 %.

Les exemples précédents montrent l'intérêt de la présente invention.

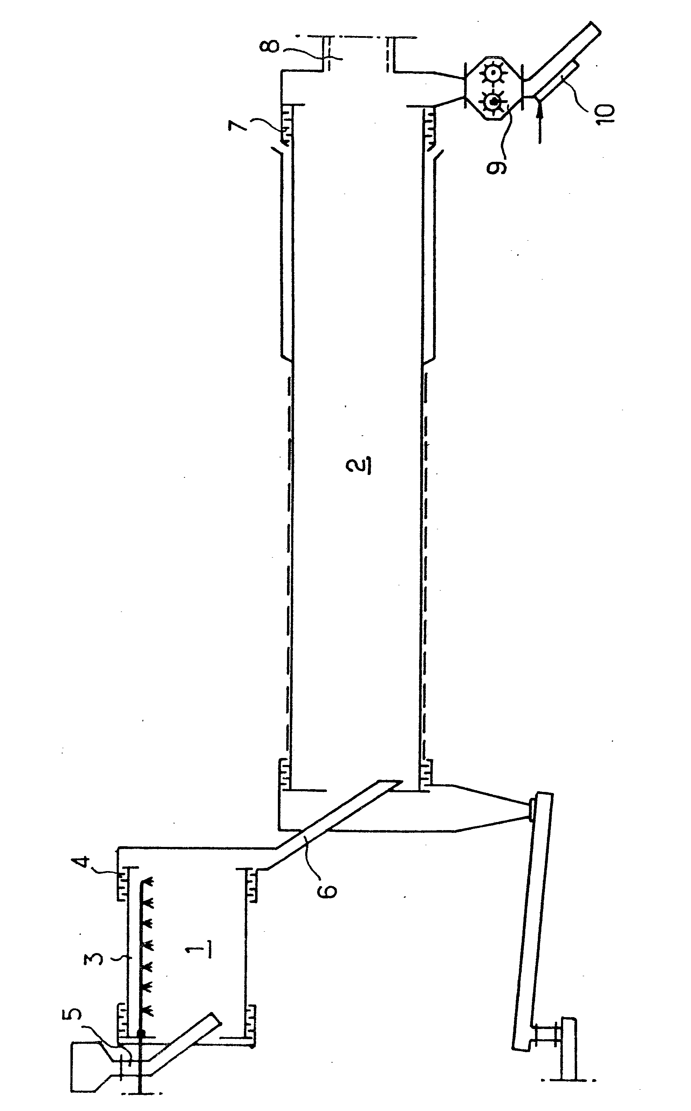

## Revendications

1. Procédé de purification de sulfate de sodium renfermant des traces de méthionine par un traitement en milieu oxydant caractérisé par le fait que l'on traite le sulfate de sodium par une solution de chlorate, puis que l'on calcine le sulfate de sodium ainsi obtenu.

2. Procédé selon 1 caractérisé par le fait que l'on traite le sulfate de sodium par une solution concentrée de chlorate de sodium la quantité de chlorate par rapport au sulfate étant d'au moins 1 à 3 % en poids.

3. Procédé de purification de sulfate de sodium renfermant des traces de méthionine par un traitement en milieu oxydant, caractérisé par le fait que l'on traite le sulfate de sodium par une solution de persulfate, puis que l'on calcine le sulfate de sodium ainsi obtenu.

4. Procédé selon l'une des revendications 1 à 3, caractérisé par le fait que dans une première étape on traite le sulfate à la température ambiante par la solution oxydante de chlorate ou de persulfate de maniere à imprégner le sulfate de sodium, puis dans une deuxième étape on fait subir un traitement thermique au sulfate imprégné en élevant progressivement et uniformément la température.

5. Procédé selon la revendication 4, caractérisé par le fait que le traitement thermique est effectué au moyen d'un gaz chaud alimenté à contre-courant dans un four rotatif.

6. Procédé selon l'une des revendications 1, 2, 4, 5 caractérisé en ce que, après avoir imprégné le sulfate de sodium par la solution de chlorate de sodium, on traite thermiquement ledit sulfate au moins pendant une heure, à une température comprise entre 450 et 600°C.

### Patentansprüche

1. Verfahren zum Reinigen von Natriumsulfat, das Spuren von Methionin enthält, durch eine Behandlung in oxidierendem Medium, dadurch gekennzeichnet, daß man das Natriumsulfat mit einer Chloratlösung behandelt und dann das so erhaltene Natriumsulfat brennt.

2. Verfahren nach Anspruch 1, dadurch gekennzeichnet, daß man das Natriumsulfat mit einer konzentrierten Natriumchloratlösung behandelt, wobei die Chloratmenge, bezogen auf das Sulfat, mindestens 1 bis 3 Gew.-% beträgt.

3. Verfahren zum Reinigen von Natriumsulfat, das Spuren von Methionin enthält, durch eine Behandlung in oxidierendem Medium, dadurch gekennzeichnet, daß man das Natriumsulfat mit einer Persulfatlösung behandelt und anschließend das so erhaltene Natriumsulfat brennt.

4. Verfahren nach einem der Ansprüche 1 bis 3, dadurch gekennzeichnet, daß man in einer ersten Stufe das Sulfat bei Raumtemperatur mit der oxidierenden Chlorat- oder Persulfatlösung behandelt, so daß das Natriumsulfat imprägniert wird, worauf man in einer zweiten Stufe das imprägnierte Sulfat einer Wärmebehandlung unterwirft, indem man allmählich und gleichmäßig die Temperatur erhöht.

5. Verfahren nach Anspruch 4, dadurch gekennzeichnet, daß die Wärmebehandlung mit einem Heißgas vorgenommen wird, das im Gegenstrom in einen Trommelofen eingespeist wird.

6. Verfahren nach einem der Ansprüche 1, 2, 4 oder 5, dadurch gekennzeichnet, daß man nach dem Imprägnieren des Natriumsulfats mit der Natriumchloratlösung das Sulfat mindestens während einer Stunde bei einer Temperatur von 450 bis 600°C wärmebehandelt.

### Claims

1. Process for the purification of sodium sulphate containing traces of methionine, by a treatment in an oxidising medium, characterised in that the sodium sulphate is treated with a chlorate solution, and then the resulting sodium sulphate is calcined.

2. Process according to claim 1 characterised in that the sodium sulphate is treated with a concentrated sodium chlorate solution, the amount of chlorate with respect to the sulphate being at least 1 to 3% by weight.

3. Process for the purification of sodium sulphate containing traces of methionine, by a treatment in an oxidising medium, characterised in that the sodium sulphate is treated with a persulphate solution, and then the resulting sodium sulphate is calcined.

4. Process according to one of claims 1 to 3 characterised in that, in a first stage, the sulphate is treated at ambient temperature with the oxidising solution of chlorate or persulphate so as to impregnate the sodium sulphate, then, in a second stage, the impregnated sulphate is subjected to a heat treatment by progressively and uniformly raising the temperature.

5. Process according to claim 4 characterised in that the heat treatment is performed by means of a hot gas which is fed in countercurrent mode into a rotary furnace.

6. Process according to one of claims 1, 2, 4 and 5 characterised in that, after the sodium sulphate has been impregnated with the sodium chlorate solution, said sulphate is subjected to a heat treatment for at least an hour, at a temperature of between 450 and 600°C.

**0 001 533**